(19) Europäisches Patentamt
European Patent Office
Office européen des brevets

(11) **EP 4 071 365 B1**

(12) **EUROPEAN PATENT SPECIFICATION**

(45) Date of publication and mention
of the grant of the patent:
**20.08.2025 Bulletin 2025/34**

(21) Application number: **22166710.8**

(22) Date of filing: **05.04.2022**

(51) International Patent Classification (IPC):
*F04D 27/00* (2006.01)    *F24F 11/75* (2018.01)
*F24F 11/77* (2018.01)    *H02P 6/06* (2006.01)
*H02P 6/28* (2016.01)

(52) Cooperative Patent Classification (CPC):
**F04D 27/001; F04D 27/00; F04D 27/004;
F24F 11/75; F24F 11/77; H02P 6/06; H02P 6/34;
H02P 23/16;** F05D 2270/304; F05D 2270/3061;
F05D 2270/335

(54) **SYSTEMS AND METHODS FOR CONTROLLING AN ELECTRIC BLOWER MOTOR IN A FLUID MOVING SYSTEM**

SYSTEME UND VERFAHREN ZUR STEUERUNG EINES ELEKTRISCHEN GEBLÄSEMOTORS IN EINEM FLUIDBEWEGUNGSSYSTEM

SYSTÈMES ET PROCÉDÉS POUR COMMANDER UN MOTEUR DE SOUFFLANTE ÉLECTRIQUE DANS UN SYSTÈME DE DÉPLACEMENT DE FLUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2021 US 202117223417**

(43) Date of publication of application:
**12.10.2022 Bulletin 2022/41**

(73) Proprietor: **REGAL BELOIT AMERICA, INC.**
**Beloit, WI 53511 (US)**

(72) Inventors:
• **YANG, Bin**
**Beloit, 53511 (US)**

• **BEIFUS, Brian Lee**
**Beloit, 53511 (US)**
• **BECERRA, Roger Carlos**
**Beloit, 53511 (US)**

(74) Representative: **South, Nicholas Geoffrey et al**
**Venner Shipley LLP**
**200 Aldersgate**
**London EC1A 4HD (GB)**

(56) References cited:
WO-A1-2020/146387    DE-A1- 102018 211 869
US-A1- 2019 331 123    US-A1- 2020 217 548

**Description**

FIELD

This application claims priority to U.S. Non-Provisional Patent Application No. 17/223,417 filed on 06 April 2021.

FIELD

The field of the disclosure relates generally to a control system for electric motors and, more specifically, a control system that enables approximately constant fluid-flow production from a fluid moving apparatus.

BACKGROUND

At least some electric motors are torque-calibrated when manufactured to ensure the torque output at the drive shaft of the electric motor matches the torque commanded. At least some electric motors, particularly electric motors driving blowers, such as a forward-curved blower, are further calibrated to produce an approximately constant fluid-flow or, more specifically, airflow during operation in either a torque-control mode or a speed-control mode. Such a calibration, or characterization, quantizes airflow output for a given speed and torque output when driving the blower. The actual airflow output can vary according to the blower construction or duct, space, or other airflow restriction, into which the airflow is directed.

Constant fluid-flow heating, ventilation, and air conditioning (HVAC) systems improve thermal comfort and energy savings. Constant fluid-flow systems may also be used in certain refrigeration systems or pumping systems. In a constant fluid-flow system, a control system for an electric blower motor receives a fluid-flow rate demand, for example, a value in cubic feet per minute (CFM), and then determines, for example, by a polynomial or constant fluid-flow algorithm, an appropriate motor torque or motor speed to produce approximately the fluid-flow demanded. In a torque-controlled implementation, for example, motor torque is regulated based on a monitored motor speed to produce the approximate fluid-flow.

Some certain types of blowers may produce multiple different fluid-flows when operated at a given torque and speed, particularly in certain operating ranges, such as at high fluid flows. Likewise, it is desirable to operate other fluid moving apparatuses, such as, for example, compressors, fans (e.g., axial fans, vane-axial fans, mix flow fans, dual stage axial flow fans, tube axial fans, multi-stage axial fans, or any other type of fan), impellers, and pumps, to produce an approximately constant fluid-flow. Consequently, a control system using known constant fluid-flow algorithms cannot effectively operate an electric blower or certain types of fans and compressors to produce a demanded fluid-flow by operating in a traditional torque-control or speed-control mode. A control system that overcomes this limitation for electric blowers, compressors, and certain types of fans is desired.

WO 2020/146387 A1 discloses a control system for an electric motor configured to drive a fluid moving apparatus to generate a fluid-flow. The control system includes a drive circuit configured to regulate power supplied to a stator of the motor to turn a rotor and generate the fluid-flow, and a processor that computes a value proportional to at least one of a system resistance or a static pressure for the fluid moving apparatus based on a fixed set point for a first control parameter and a feedback parameter. The processor receives a fluid-flow rate demand and computes an operating set point for a second control parameter based on the fluid-flow rate demand and the value proportional to the system resistance or the static pressure. The processor controls the drive circuit based on the operating set point to supply power to the motor and operate the fluid moving apparatus to generate the fluid-flow.

BRIEF DESCRIPTION

In one aspect, a control system for an electric motor configured to drive a fluid-moving apparatus to generate a fluid-flow is provided. The control system includes a drive circuit configured to regulate electrical power supplied to a stator of the electric motor to turn a rotor of the electric motor and generate the fluid-flow. The control system further includes a processor coupled in communication with the drive circuit. The processor is configured to control the drive circuit to operate the electric motor at a plurality of control values of a control parameter. The processor is further configured to determine, for each of the plurality of control values, a fluid-flow value and a feedback value. The processor is further configured to compute a mathematical relationship between fluid-flow rate and one of the control parameter or the feedback parameter. The feedback value corresponds to a feedback parameter. The processor is further configured to receive a fluid-flow rate demand value. The processor is further configured to compute an operating setpoint for the control parameter based on the fluid-flow rate demand value and the computed mathematical relationship. The processor is further configured to control the drive circuit to operate the electric motor at the operating setpoint.

In another aspect, a method for controlling an electric motor configured to drive a fluid-moving apparatus to generate a fluid-flow is provided. The method includes controlling a drive circuit to operate the electric motor at a plurality of control values of a control parameter. The drive circuit is configured to regulate electrical power supplied to a stator of the electric motor to turn a rotor of the electric motor and generate the fluid-flow. The method further includes measuring, for each of the plurality of control values, a fluid-flow value and a first feedback value. The method further includes computing a mathematical relationship between fluid-flow rate and one of the control parameter or the feedback parameter. The feedback value corresponds to a feedback parameter. The method further includes receiving a fluid-flow rate demand value. The method further includes computing an operating setpoint for the control parameter based on the fluid-flow rate demand value and the computed mathematical relationship. The method further includes controlling the drive circuit to operate the electric motor at the operating setpoint.

In another aspect, a fluid moving system is provided. The fluid moving system includes a fluid-moving apparatus. The fluid moving system further includes an electric motor coupled to the fluid moving apparatus. The electric motor is configured to drive the fluid-moving apparatus to generate a fluid-flow. The fluid moving system further includes a drive circuit configured to regulate electrical power supplied to a stator of the electric motor to turn a rotor of the electric motor and generate the fluid-flow. The fluid moving system further includes a processor coupled in communication with the drive circuit. The processor is configured to control the drive circuit to operate the electric motor at a plurality of control values of a control parameter. The processor is further configured to determine, for each of the plurality of control values, a fluid-flow value and a feedback value. The processor is further configured to compute a mathematical relationship between fluid-flow rate and one of the control parameter or the feedback parameter. The feedback value corresponds to a feedback parameter. The processor is further configured to receive a fluid-flow rate demand value. The processor is further configured to compute an operating setpoint for the control parameter based on the fluid-flow rate demand value and the computed mathematical relationship. The processor is further configured to control the drive circuit to operate the electric motor at the operating setpoint.

BRIEF DESCRIPTION OF THE DRAWINGS

FIG. 1 is a block diagram of an exemplary constant fluid-flow system;

FIG. 2 is a logical block diagram of the constant fluid-flow system shown in FIG. 1;

FIG. 3 is a schematic diagram of an exemplary constant fluid-flow control loop for a torque-controlled electric motor;

FIG. 4 is a schematic diagram of an exemplary constant fluid-flow control loop for a speed-controlled electric motor; and

FIG. 5 is a flow diagram of an exemplary method of operating an electric motor configured to drive a blower to generate a fluid-flow into a duct.

DETAILED DESCRIPTION

Embodiments of the control system and methods of operating an electric motor for a constant fluid-flow system described herein provide improved characterization of the constant fluid-flow system based on motor torque, motor speed, fluid-flow, and/or values proportional thereto. The improved characterization enables constant fluid-flow production using a fluid moving apparatus, or fluid mover, such as, for example, a backward-curved electric blower, a compressor, an impeller, or a fan (e.g., a vane-axial fan), while maintaining the benefits of such fluid moving apparatus, for example, the benefits of a backward-curved electric blower over a radial or forward-curved blower, namely the improved efficiency and greater pressure generation. The improved characterization also enables constant fluid-flow production using, for example, a forward-curved electric blower or a radial electric blower

The control system, as described herein, performs this characterization based on a correlation between speed, fluid-flow, and another control parameter such as torque. The control system performs a characterization process where the electric motor is operated at a plurality of control setpoints corresponding to, for example, torque or speed, and fluid-flow and other feedback parameters are measured at each setpoint. Using the measurements, the control system computes a mathematical relationship that defines the correlation between speed, fluid-flow, and torque. Using this relationship, the control system may determine, for a demanded fluid-flow value, a control (e.g., speed or torque) value for the electric motor that will cause the fluid-flow system to produce the demanded-fluid flow. These relationships or correlations are apparatus-agnostic, and, as such, may be applied to any fluid moving apparatus.

As used herein, "fluid moving apparatus" or "fluid mover" may include any fluid moving apparatus, such as, but not limited to, compressors, blowers, fans (e.g., axial fans, vane-axial fans, mix flow fans, dual stage axial flow fans, tube axial fans, multi-stage axial fans, or any other type of fan), impellers, and pumps. "Air moving apparatus" or "air mover" may more specifically include, for example, blowers and/or fans. It should be readily understood that "air" may refer to any gaseous fluid.

Embodiments of the control system and methods described herein characterize the constant fluid-flow system utilizing, for example, correlations among torque (T), speed (N), demanded fluid-flow (Q), or one or more additional parameter. More specifically, the constant fluid-flow system may be characterized by a fluid-flow algorithm, or "torque correlation," that defines, for example, torque (T) as a function of speed (N) and demanded fluid-flow (Q). In alternative embodiments, the constant fluid-flow system is characterized by a "speed correlation" that defines speed (N) as a function of torque (T) and demanded fluid-flow (Q). Using these correlations, together referred to as the "constant fluid-flow algorithm," a fluid moving apparatus, or fluid mover, such as, for example, a backward-curved, forward-curved, or radial electric blower motor, a compressor, an impeller, or a fan such as an axial or vane-axial fan can be operated in a torque control mode, a speed control mode, or both to produce an approximately constant fluid-flow from the fluid mover.

In alternative embodiments, the electric motor may be characterized utilizing correlations among torque (T) or speed (N) and one or more of power input to the electric motor, current supplied to the electric motor, power output at the drive shaft of the motor, motor efficiency, or power output from the fluid mover itself, i.e, fluid power. For example, power output at the drive shaft is correlated to torque (T) and speed (N), i.e., $P_{shaft} = TN$, as well as to power input to the electric motor and motor efficiency, i.e., $P_{in} = P_{shaft}/motor\ efficiency$. Moreover, power input to the electric motor is a function of voltage and current supplied to the stator windings of the electric motor, i.e., $P_{in} = VI$.

In a torque-controlled implementation or speed-controlled implementation, for example, the characterization embodied in the control system and methods described herein produces one or more torque-speed-fluid-flow data points that characterize a relation between fluid flow data and other parameters. That relationship is then approximated by fluid-flow algorithm such as a polynomial function, power function, exponential function, or other formula that defines a relationship between fluid flow data points and other parameters such as motor torque (T), motor speed (N).

In certain embodiments, the constant fluid-flow system is first characterized to determine a set of constants for a fluid-flow algorithm. In one embodiment, the fluid mover, for example, a blower, vane axial fan, etc., is operated at a first constant torque (T) or speed (N), for example, 20%, and an output speed (N) or torque (T) is measured to produce a first torque-speed pair from which a torque-speed-fluid-flow data point can be computed using a fluid-flow algorithm, or "torque correlation," for example, T=f(Q,N), similar in form to a traditional constant fluid-flow algorithm for a forward-curved blower, for example. For example, the fluid-flow algorithm may take the following form:

$$T = k_1 NQ + k_2 Q^2 + k_3 N + k_4 N^2 + k_5, \qquad \text{EQ. 1}$$

where, $k_1$, $k_2$, $k_3$, $k_4$, $k_5$ are constants. Generally, the constants are predetermined for the fluid mover prior to installation.

The fluid mover may be further operated at a second fixed torque (T) or speed (N), for example, 40%, and speed (N) or torque (T) is measured to produce a second torque-speed pair. The second torque-speed pair, and EQ. 1 may be used to determine a linear relationship between speed and fluid flow as expressed by the following equation:

$$N = x_1 Q + x_2, \quad \text{EQ. 2}$$

where, $x_1$ and $x_2$ are constants.

Using EQ. 2, when a demanded fluid-flow (Q) is received, a corresponding speed (N) may be determined, and accordingly, using EQ. 1, a torque (T) setpoint at which to operate the fluid mover may be determined.

Generally, a fluid-flow algorithm having more terms produces a finer fit to the data collected during characterization and, therefore, yields more accurate estimates of actual fluid-flow. The fit of a given fluid-flow algorithm may be further improved by enabling non-integer (e.g., real number) values for one or more coefficients or exponents. Consequently, electric motors and motor controllers must have sufficient processors, memory, communication interfaces, and software to program, store, recall, and execute such fluid-flow algorithms. Moreover, a greater number of terms and non-integer coefficients in the fluid-flow algorithm generally correlates to heavier computation loads in deriving the necessary coefficients.

The fluid flow system may be further characterized by its system resistance (R). In many constant fluid-flow systems, the system resistance is generally considered constant over a period of time. In practice, that system resistance may shift over time, for example, due to dirt, dust, or other contamination buildup on the a filter or other changing components of the system, path, or space into which the fluid-flow is directed. In other systems, the system resistance is controllable, for example, by configuring dampers, louvres, ducts, or vents to increase or decrease the resistance of the system to the fluid-flow. In such systems, the control system detects a change in system resistance (R), for example, by detecting a change in torque (T), and adjusts the operating point accordingly. For example, when operating in a speed-controlled mode and the system resistance (R) increases, the motor controller detects a change in torque output of the electric motor. This new torque-speed pair results in a recalculation of the relationship between speed and fluid-flow (EQ. 2). This procedure iterates until the system converges on a stable operating point for the increased system resistance (R).

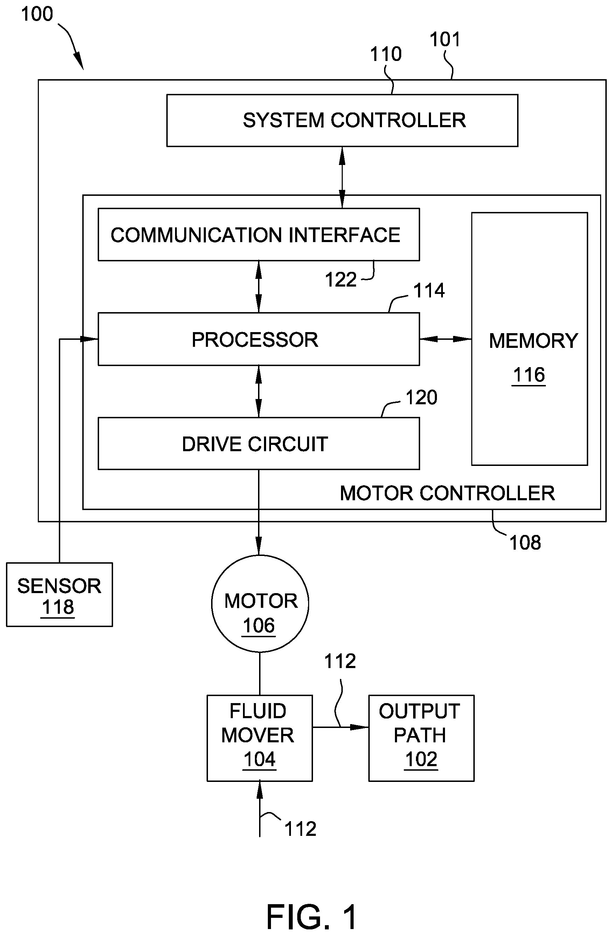

FIG. 1 is a block diagram of a constant fluid-flow system 100. Constant fluid-flow system 100 includes a control system 101, an output path 102, a fluid mover 104, and an electric motor 106. Control system 101 includes a motor controller 108, and a system controller 110. In other embodiments, constant fluid-flow system 100 may include additional, fewer, or alternative components, including those described elsewhere herein. For example, fluid mover 104 may be configured to generate a fluid-flow into a space other than a defined duct, plenum, or other output path.

Fluid mover 104 is configured to generate a fluid-flow 112 directed through output path 102. Output path 102 is configured to guide the fluid-flow for circulation and distribution within a system, building, vehicle, or other structure. Output path 102, or alternatively the space into which fluid-flow 112 is directed, has a fluid-flow restriction, or system resistance (R), that affects the fluid-flow output from fluid mover 104. The fluid-flow restriction is based on various parameters that may affect fluid-flow within constant fluid-flow system 100, such as, but not limited to, the internal dimensions of output path 102, open or closed dampers, contaminants (e.g., dust) within output path 102, the geometry of output path 102, or alternatively the space into which fluid-flow 112 is directed, and the like.

Electric motor 106 is configured to drive fluid mover 104 to generate the fluid-flow 112 into output path 102. In at least some embodiments, electric motor 106 is an induction motor configured to convert electrical power into mechanical power. In alternative embodiments, electric motor 106 is a permanent magnet motor. In one example, electric motor 106 is coupled to a wheel (not shown) of fluid mover 104 and is configured to rotate the wheel. In the exemplary embodiment, electric motor 106 is configured to operate at a plurality of torque output levels (i.e., torque-controlled) to increase or decrease a corresponding motor speed. Increasing or decreasing the motor speed of electric motor 106 causes electric motor 106 to drive fluid mover 104 to generate corresponding fluid-flows. The fluid-flow 112 generated by fluid mover 104 is at least partially a function of the motor speed of electric motor 106 and the fluid-flow restriction of output path 102. In some embodiments, electric motor 106 is integrated with fluid mover 104.

Alternatively, electric motor 106 is configured to operate at a plurality of speed output levels (i.e., speed-controlled) to increase or decrease a corresponding motor torque. As in the torque-controlled embodiments, increasing or decreasing the torque of electric motor 106 causes electric motor 106 to drive fluid mover 104 to generate corresponding fluid-flows.

System controller 110 and motor controller 108 are communicatively coupled to electric motor 106 to operate electric motor 106. More specifically, motor controller 108 supplies electrical power of a certain current amplitude, phase, and frequency to the stator windings of electric motor 106 to operate electric motor 106 according to instructions or commands from system controller 110. By adjusting the amplitude, phase, and frequency, motor controller 108 controls the torque (or alternatively speed in a speed-controlled embodiment) of the electric motor 106, thereby facilitating control of the speed of electric motor 106. In other embodiments, motor controller 108 may be communicatively coupled to a second controller (not shown) associated with electric motor 106. In such embodiments, motor controller 108 may be configured to transmit control signals to the second controller to instruct the second controller to operate electric motor 106. In such an embodiment, motor controller 108 may be separated, or remote, from electric motor 106. For example, motor controller 108 may be located within an HVAC assembly along with fluid mover 104 and electric motor 106. In another embodiment, for example, motor controller 108 may be located with a thermostat system or system controller 110.

Motor controller 108 includes a processor 114, a memory 116 communicatively coupled to processor 114, and a sensor system 118. Processor 114 is configured to execute instructions stored within memory 116 to cause motor controller 108 to function as described herein. For example, memory 116 is configured to store a constant fluid-flow algorithm to be executed by processor 114. Memory 116 is further configured to store a plurality of coefficient values for use in the constant fluid-flow algorithm. Moreover, memory 116 is configured to store data to facilitate calibrating electric motor 106. In some embodiments, motor controller 108 may include a plurality of processors 114 and/or memories 116. In other embodiments, memory 116 may be integrated with processor 114. In one example, memory 116 includes a plurality of data storage devices to store instructions and data as described herein. In alternative embodiments, an additional processor and memory may be incorporated into system controller 110 for the purpose of storing a constant fluid-flow algorithm and coefficient values, and for executing the constant fluid-flow algorithm for the purpose of controlling motor controller 108 to produce a demanded constant fluid-flow. Control system 101 is described herein as allocating the function of storing and executing the constant fluid-flow algorithm at motor controller 108, it should be understood that any processor and memory within control system 101 may carry out the functions of controlling fluid mover 104 to produce an approximately constant fluid-flow.

Prior to operation of motor controller 108 described herein, motor controller 108 receives values for coefficients that result from a regression analysis of characterization data for electric motor 106 and fluid mover 104. The coefficients correspond to programmable variables within the constant fluid-flow algorithm stored in memory on motor controller 108 and executable by processor 114 during operation. In certain embodiments, certain other constants for the constant fluid-flow algorithm, or alternative constant fluid-flow algorithms, may be defined and stored, for example, in memory 116, such as an EEPROM. In certain embodiments, the values for coefficients may be received from external system controller 110 or other device over a wired or wireless communication channel. In another alternative embodiment, the values for coefficients may be programmed into motor controller 108 by a technician or installer when motor controller 108 is installed.

During operation, motor controller 108 generally receives a fluid-flow rate demand (Q) from external system controller 110 and one of motor torque (T) and motor speed (N) measured at electric motor 106. The other of motor torque (T) and motor speed (N) is computed. For example, in a torque-controlled embodiment, system controller 110 transmits a fluid-flow rate demand (Q) to motor controller 108, and motor controller 108 computes a motor torque (T) to be commanded of electric motor 106 based on a computed required motor speed (N). In an alternative embodiment, system controller 110 transmits a discrete selection, or an index, of a particular fluid-flow rate demand (Q) from among a plurality of values stored in a table in memory 116. Motor speed (N) may be determined from the current signal supplied to the stator windings or, alternatively, may be measured directly by sensor system 118. The torque control loop then recursively executes, or iterates, until motor torque (T) converges on an objective torque. The torque control loop may execute, for example, once every 100 milliseconds. In alternative embodiments, the torque control loop period may be lengthened or shortened depending on, for example, the specific electric motor, fluid mover, or output path configuration.

Likewise, in a speed-controlled embodiment, system controller 110 transmits a fluid-flow rate demand (Q) to motor controller 108, and motor controller 108 computes a motor speed (N) to be commanded of electric motor 106 based on a required motor torque (T). As described above with respect to motor speed (N), motor torque (T) may be determined from the current signal supplied to the stator windings or, alternatively, may be measured directly by sensor system 118. The speed control loop then iterates until motor speed (N) converges on an objective speed.

Sensor system 118 includes one or more sensors that are configured to monitor electric motor 106. In certain embodiments, sensor system 118 is omitted and motor torque and speed are determined from the current signal supplied to the stator windings of electric motor 106. In one embodiment, sensor system 118 is configured to monitor a frequency output of motor controller 108 to electric motor 106. Sensor system 118 may monitor other data associated with electric motor 106, such as, but not limited to, motor speed, torque, power, and the like. In certain embodiments, sensor system 118 is configured to monitor a fluid-flow output of fluid mover 104. For example, sensor system 118 may include an air pressure sensor configured to monitor static pressure within output path 102, such as a duct or plenum. In some embodiments, sensor system 118 monitors electric motor 106 from motor controller 108. In such embodiments, sensor system 118 may be integrated with processor 114. In other embodiments, at least some sensors of sensor system 118 may be installed on electric motor 106 and transmit sensor data back to motor controller 108.

In one embodiment, motor controller 108 is configured to calibrate electric motor 106 for a plurality of fluid-flow output levels to determine corresponding pairs of torque and speed. The resulting fluid-flow-torque-speed data points define a surface that further defines the operating profile of constant fluid-flow system 100.

Motor controller 108 includes a drive circuit 120. Drive circuit 120 supplies electric power to the stator windings of electric motor 106 based on control signals received from processor 114. Drive circuit 120 may include, for example, various power electronics for conditioning line frequency alternating current (AC) power to be supplied to the stator windings of electric motor 106 with a desired current, i.e., phase, amplitude, and frequency. Such power electronics may include, for example, and without limitation, one or more rectifier stages, power factor correction (PFC) circuits, filters, transient protection circuits, EMF protection circuits, inverters, or power semiconductors.

Motor controller 108 includes a communication interface 122. Communications interface 122 may include one or more wired or wireless hardware interface, such as, for example, universal serial bus (USB), RS232 or other serial bus, CAN bus, Ethernet, near field communication (NFC), WiFi, Bluetooth, or any other suitable digital or analog interface for establishing one or more communication channels between system controller 110 and motor controller 108. For example, in certain embodiments, one or more parameters, such as a maximum fluid-flow rate (expressed in cubic feet per minute), fluid-flow rate demand, or one or more coefficient values, may be communicated to motor controller 108 through communications interface 122 using a pulse-width modulated signal. In certain embodiments, system controller 110 or another processor (not shown) may communicate operating parameters such as torque, speed, or power to motor controller 108 through communications interface 122. Communications interface 122 further includes a software or firmware interface for receiving one or more motor control parameters and writing them, for example, to memory 116. In certain embodiments, communication interface 122 includes, for example, a software application programming interface (API) for supplying one or more coefficient values for a constant fluid-flow algorithm. In such embodiments, received coefficient values are supplied to processor 114, processed, and stored in memory 116 along with a constant fluid-flow algorithm for subsequent execution by processor 114 during operation of electric motor 106.

In certain embodiments, memory 116 is configured to store two or more constant fluid-flow algorithms. Alternatively, memory 116 may be configured to store a single constant fluid-flow algorithm, and one or more sets of constants to be utilized by the algorithm. In certain embodiments, electric motor 106 and motor controller 108 are configured to receive through communication interface 122 and utilize those coefficients with the constant fluid-flow algorithm.

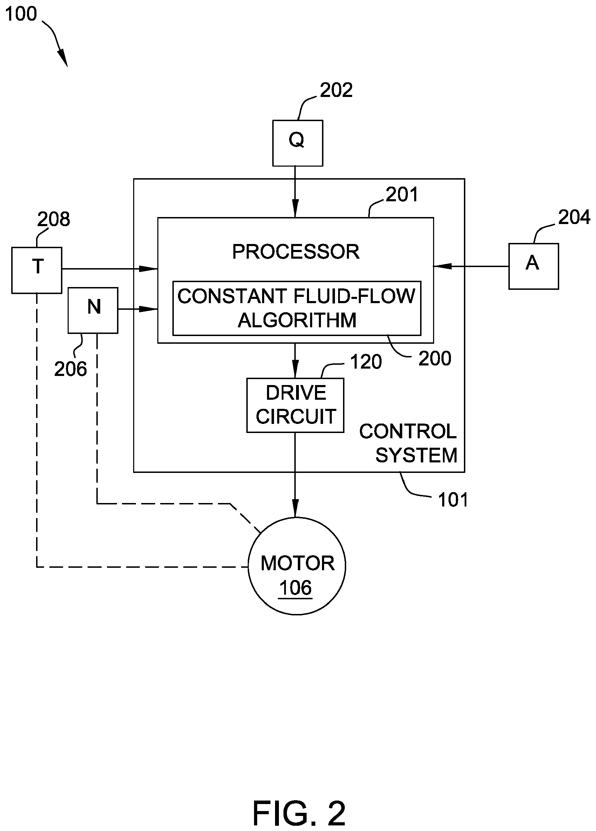

FIG. 2 is a logical block diagram of constant fluid-flow system 100, including electric motor 106 and control system 101 (shown in FIG. 1). A processor 201 (e.g., processor 114 of motor controller 108, or a processor of system controller 110) transmits control signals to drive circuit 120 to control the current amplitude, phase, and frequency of the electric power supplied to electric motor 106. Processor 201 executes, for example, a constant fluid-flow algorithm 200, such as that described above in EQ. 1 and EQ. 2 to compute one of a torque set point and a speed set point for controlling drive circuit 120 and electric motor 106. Execution of the algorithm is typically carried out periodically, for example, at 10 Hertz, to update the torque set point or the speed set point. During operation, processor 201 receives a fluid-flow rate demand value, Q 202 that is used in constant fluid-flow algorithm 200. Processor 201, in certain embodiments, may receive fluid-flow rate demand value, Q 202, directly from a system controller, such as system controller 110 (shown in FIG. 1). Alternatively, system controller 110 may supply fluid-flow rate demand value, Q 202 using discrete inputs representing an index into a table of fluid-flow rate demand values stored in a memory from which processor 201 receives fluid-flow rate demand value, Q 202. Alternatively, system controller 110 may supply a pulse width modulated (PWM) signal that proportionately varies between two fluid-flow rate demand values. In yet another alternative embodiment, system controller 110 may supply a digital command including fluid-flow rate demand value, Q 202.

Processor 201 also receives coefficient values, A 204 that are used in constant fluid-flow algorithm 200. Coefficient values, A 204 may be received, for example, from system controller 110, from a memory, such as memory 116 (shown in FIG. 1), or from another external device. In certain embodiments, processor 201 receives coefficient values, A 204 when constant fluid-flow system 100 is, for example, manufactured, installed, or powered on, and processor 201 operates with those same values from that point on unless it is reset, reprogrammed, or recalibrated by a technician or other user. In other embodiments, processor 201 may receive a periodic update of coefficient values A 204 from a remote device and constant fluid-flow algorithm 200 utilizes the latest values for a given iteration.

In certain embodiments, constant fluid-flow algorithm 200 is selected from among multiple algorithms stored in memory, such as memory 116. The memory may include, for example, read-only memory such as an EEPROM. Constant fluid-flow algorithm 200 is retrieved from the memory based on a user selection or a selection by system controller 110. In turn, for example, system controller 110 then transmits corresponding coefficient values, A 204, a corresponding memory address for the space in the memory containing the appropriate coefficient values, A 204, or an identifier, or "pointer," to such a memory address to processor 201. Processor 201 then gains access to the corresponding space in the memory and reads coefficient values, A 204.

Processor 201 receives at least one of a measured speed, N 206 and a measured torque, T 208 of electric motor 106. That is used in constant fluid-flow algorithm 200. Measured speed, N 206, for example, may be derived from a current signal supplied to the stator windings of electric motor 106. For example, such a current signal may be measured by a current sensor and measured speed, N 206 is derived from that measurement. Alternatively, processor 201 may receive a frequency measurement from a frequency sensor on electric motor 106, the output of which may be converted to measured speed, N 206. Alternatively, motor speed may be measured by any other suitable method, such as by further analyzing the current signal supplied to the stator windings of electric motor 106. Measured torque, T 208, for example, may be derived from the current signal supplied to the stator windings of electric motor 106. For example, such a current signal may be measured by a current sensor and measured torque, T 208 is derived from that measurement, for example, by inference that torque output is equal to the commanded torque by virtue of a closed loop control system. Alternatively, processor 201 may receive a torque measurement from a torque sensor on electric motor 106 or, alternatively, by any other suitable method.

During operation, processor 201 executes constant fluid-flow algorithm 200 using the several inputs described above, including fluid-flow rate demand value, Q 202, and at least one of measured speed, N 206 and measured torque, T 208. Upon execution of constant fluid-flow algorithm 200, processor 201 computes one of a torque set point and a speed set point that is used to control drive circuit 120. Drive circuit 120 then supplies the desired current and frequency of AC electric power to electric motor 106 to turn fluid mover 104 (shown in FIG. 1).

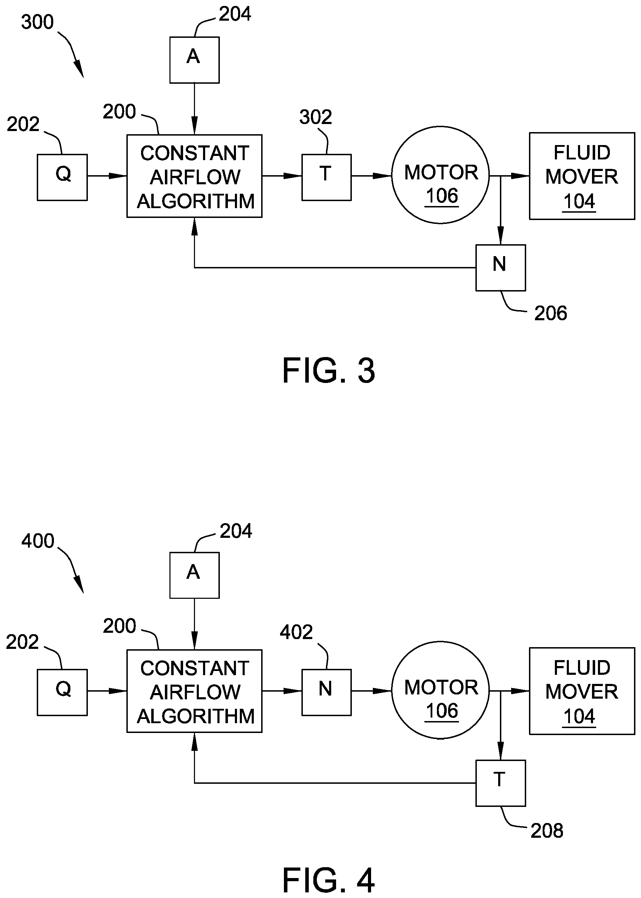

FIG. 3 is a schematic diagram of one embodiment of constant fluid-flow control loop 300 for use in controlling a torque-controlled electric motor, such as electric motor 106 of constant fluid-flow system 100 (shown in FIG. 1 and FIG. 2). Control loop 300 may be embodied, for example, in motor controller 108, processor 114, processor 201, or another processor in system controller 110 or other remote device, and illustrates control of electric motor 106 by execution of constant fluid-flow algorithm 200 to compute a torque set point 302. Constant fluid-flow algorithm 200 receives fluid-flow rate demand, Q 202 and measured speed, N 206, and computes torque set point 302 based on, for example, the formulas shown in EQ. 1 and EQ. 2.

FIG. 4 is a schematic diagram of one embodiment of a constant fluid-flow control loop 400 for use in controlling a speed-controlled electric motor, such as electric motor 106 of constant fluid-flow system 100 (shown in FIG. 1 and FIG. 2). Control loop 400 may be embodied, for example, in motor controller 108, processor 114, processor 201, or another processor in system controller 110 or other remote device, and illustrates control of electric motor 106 by execution of constant fluid-flow algorithm 200 to compute a speed set point 402. Constant fluid-flow algorithm 200 receives fluid-flow rate demand, Q 202 and measured torque, T 208, and computes speed set point, N, 402 based on, for example, the formulas shown in EQ. 1 and EQ. 2.

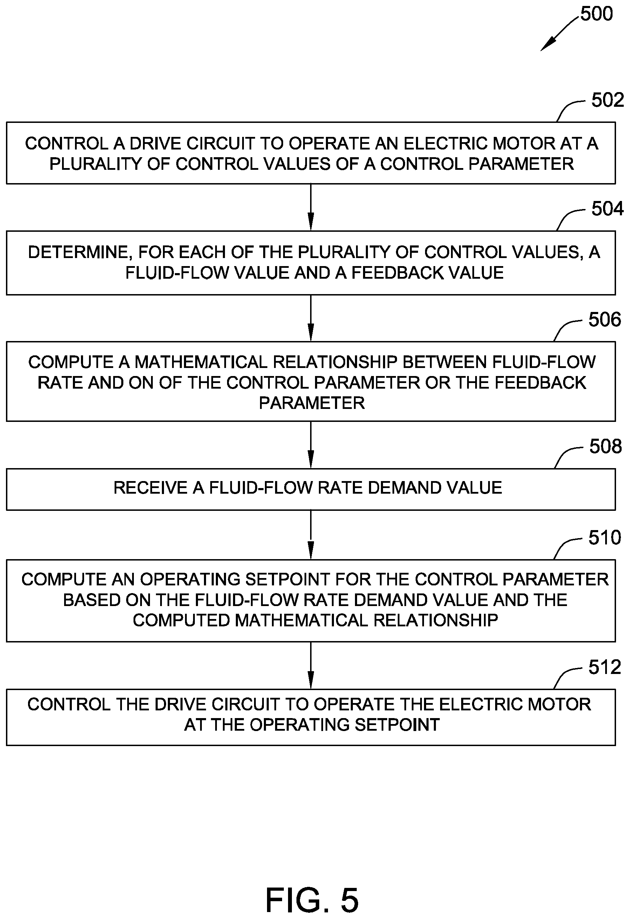

FIG. 5 is a flow diagram of an embodiment of a method 500 of operating an electric motor configured to drive a fluid moving apparatus, or fluid mover, such as electric motor 106 and fluid mover 104 of constant fluid-flow system 100 (shown in FIG. 1). Fluid mover 104 then generates a fluid-flow into a space, such as output path 102. Referring to FIG. 1 and FIG. 5, method 500 may be embodied in a control system such as control system 101 having a processor, such as processor 114 of motor controller 108 or processor 201 of another device such as system controller 110 (all shown in FIG. 1 and FIG. 2).

Control system 101 controls 502 drive circuit 120 to operate electric motor 106 at a plurality of control values of a control parameter. For example, in some embodiments, control system 101 controls drive circuit 120 to operate the electric motor 106 at a first control value of a control parameter and a second control value of the control parameter. The control parameter may be torque (T) output from electric motor 106. Alternatively, the control parameter may be speed (N). Alternatively, the control parameter may be another parameter such as shaft power, input power, or current. In some embodiments, the first and second control values are expressed as a percentage, for example, 20% and 40% of a maximum rated torque (T) or speed (N) of electric motor 106.

Control system 101 determines 504, for each of the plurality of control values, a fluid-flow value and a feedback value. The feedback value corresponding to a feedback parameter, such as speed (N) or torque (T). For example, in embodiments wherein the control parameter is torque (T), the feedback parameter may be speed (N), and in embodiments wherein the control parameter is speed (N), the feedback parameter may be torque (T). The fluid-flow values and the feedback values are associated with the control value, such that each fluid-flow value, the feedback value, and the control value a first data point from which a mathematical relationship between the feedback parameter and fluid-flow may be obtained as described below.

Control system 101 computes 506 a mathematical relationship between fluid-flow rate and one of the control parameter or the feedback parameter. In some embodiments control system 101 computes the mathematical relationship based on the plurality of control values, the fluid flow values, and the feedback values. In some embodiments, mathematical relationship is defined by a linear equation such as, for example, EQ. 2. Alternatively, the mathematical relationship may be defined by another type of equation such as, for example, a polynomial equation, an exponential equation, or a power equation.

Control system 101 receives 508 a fluid-flow rate demand value (Q). This value may be received, for example, from remote system controller 110. The fluid-flow rate demand value may be transmitted as, for example, a digital formatted value or, alternatively, a continuous pulse-width modulated signal representing the desired fluid-flow rate demand (Q).

Control system 101 computes 510 an operating setpoint for the control parameter based on the fluid-flow rate demand value (Q) and the computed mathematical relationship. Using, for example, EQ. 2, control system 101 determines a speed (N) corresponding to the demanded torque (Q), from which control system 101 may determine a torque setpoint at which to operate electric motor 106 to produce the demanded torque (Q). Control system 101 controls 514 drive circuit 120 to operate electric motor 106 at the computed operating setpoint.

In certain embodiments, control system 101 uses additional control parameter, feedback parameter, and fluid-flow data points to compute the operating setpoint or the mathematical relationship between the control parameter or the feedback parameter and fluid-flow. In certain such embodiments, control system 101 is configured to control drive circuit 120 to operate electric motor 106 at a third control value of the control parameter (e.g., 60% torque or speed), determine a third fluid-flow value and a third feedback value, and compute the operating setpoint further based on the third fluid-flow value and the third feedback value. In such embodiments, control system 101 may use further data points to compute the operating setpoint. Utilizing more data points in some cases may increase the accuracy with which the computed operating setpoint corresponds to the demanded fluid-flow (Q).

Over time, in certain embodiments, the system resistance (R) may shift, for example, the system resistance may increase due to dust buildup on a filter or other pathway. Alternatively, the system resistance (R) may be deliberately changed by adjusting one or more dampers on the constant fluid-flow system. Under such circumstances, control system 101 is configured to determine a difference between a current fluid-flow rate value and the demanded fluid-flow rate demand value is greater than a threshold difference; and recompute the mathematical relationship in response to a determination the difference is greater than the threshold difference. Control system 101 iterates these computations until the operating point stabilizes at a new torque (T) and speed (N).

The methods and systems described herein may be implemented using computer programming or engineering techniques including computer software, firmware, hardware or any combination or subset thereof, wherein the technical effect may include at least one of: (a) enabling use of a backward-curved blower, compressor, impeller, or certain types of fans, such as axial and vane-axial, in constant fluid-flow systems while maintaining the benefits provided by such fluid mover over, for example, forward-curved or radial equivalent blowers; (b) improving accuracy of estimations of actual fluid-flow for backward-curved blowers, compressors, impellers, and fans; (c) reducing fluid mover size and power consumption for a given range of fluid-flows in a constant fluid-flow system by use of, for example, a backward-curved blower versus a forward-curved or radial equivalent; (d) reducing fluid mover speed for a given range of fluid-flows in a constant fluid-flow system by use of, for example, a backward-curved blower versus a forward-curved or radial equivalent; and (e) improving thermal comfort and energy savings for operation of constant fluid-flow systems in HVAC systems.

In the foregoing specification and the claims that follow, a number of terms are referenced that have the following meanings.

As used herein, an element or step recited in the singular and preceded with the word "a" or "an" should be understood as not excluding plural elements or steps, unless such exclusion is explicitly recited. Furthermore, references to "example implementation" or "one implementation" of the present disclosure are not intended to be interpreted as excluding the existence of additional implementations that also incorporate the recited features.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here, and throughout the specification and claims, range limitations may be combined or interchanged. Such ranges are identified and include all the sub-ranges contained therein unless context or language indicates otherwise.

Some embodiments involve the use of one or more electronic processing or computing devices. As used herein, the terms "processor" and "computer" and related terms, e.g., "processing device," "computing device," and "controller" are not limited to just those integrated circuits referred to in the art as a computer, but broadly refers to a processor, a processing device, a controller, a general purpose central processing unit (CPU), a graphics processing unit (GPU), a microcontroller, a microcomputer, a programmable logic controller (PLC), a reduced instruction set computer (RISC) processor, a field programmable gate array (FPGA), a digital signal processing (DSP) device, an application specific integrated circuit (ASIC), and other programmable circuits or processing devices capable of executing the functions described herein, and these terms are used interchangeably herein. The above embodiments are examples only, and thus are not intended to limit in any way the definition or meaning of the terms processor, processing device, and related terms.

In the embodiments described herein, memory may include, but is not limited to, a non-transitory computer-readable medium, such as flash memory, a random access memory (RAM), read-only memory (ROM), erasable programmable read-only memory (EPROM), electrically erasable programmable read-only memory (EEPROM), and non-volatile RAM (NVRAM). As used herein, the term "non-transitory computer-readable media" is intended to be representative of any tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal. Alternatively, a floppy disk, a compact disc - read only memory (CD-ROM), a magnetooptical disk (MOD), a digital versatile disc (DVD), or any other computer-based device implemented in any method or technology for short-term and long-term storage of information, such as, computer-readable instructions, data structures, program modules and sub-modules, or other data may also be used. Therefore, the methods described herein may be encoded as executable instructions, e.g., "software" and "firmware," embodied in a non-transitory computer-readable medium. Further, as used herein, the terms "software" and "firmware" are interchangeable, and include any computer program stored in memory for execution by personal computers, workstations, clients and servers. Such instructions, when executed by a processor, cause the processor to perform at least a portion of the methods described herein.

Also, in the embodiments described herein, additional input channels may be, but are not limited to, computer peripherals associated with an operator interface such as a mouse and a keyboard. Alternatively, other computer peripherals may also be used that may include, for example, but not be limited to, a scanner. Furthermore, in the exemplary embodiment, additional output channels may include, but not be limited to, an operator interface monitor.

The systems and methods described herein are not limited to the specific embodiments described herein, but rather, components of the systems and/or steps of the methods may be utilized independently and separately from other components and/or steps described herein.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to provide details on the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**Claims**

1. A control system for an electric motor configured to drive a fluid-moving apparatus to generate a fluid-flow, said control system comprising:

   a drive circuit configured to regulate electrical power supplied to a stator of the electric motor to turn a rotor of the electric motor and generate the fluid-flow; and
   a processor coupled in communication with said drive circuit and configured to:

   control said drive circuit to operate the electric motor at a plurality of control values of a control parameter;
   determine, for each of the plurality of control values, a fluid-flow value and a feedback value, the feedback value corresponding to a feedback parameter;
   compute a mathematical relationship between fluid-flow rate and one of the control parameter or the feedback parameter;
   receive a fluid-flow rate demand value;
   compute an operating setpoint for the control parameter based on the fluid-flow rate demand value and the computed mathematical relationship;
   control said drive circuit to operate the electric motor at the operating setpoint;
   determine a difference between a current fluid-flow rate value and the fluid-flow rate demand value is greater than a threshold difference; and
   recompute the mathematical relationship in response to a determination the difference is greater than the threshold difference.

2. The control system of Claim 1, wherein to operate the electric motor at a plurality of control values of a control parameter, said processor is further configured to:

   control said drive circuit to operate the electric motor at a first control value of the control parameter; and
   control said drive circuit to operate the electric motor at a second control value of the control parameter.

3. The control system of Claim 1, wherein the fluid-moving apparatus includes one of a backward-curved blower, a forward-curved blower, or a vane-axial fan, and wherein said fluid-flow is an airflow.

4. A method for controlling an electric motor configured to drive a fluid-moving apparatus to generate a fluid-flow, said method comprising:

   controlling a drive circuit to operate the electric motor at a plurality of control values of a control parameter, the drive circuit configured to regulate electrical power supplied to a stator of the electric motor to turn a rotor of the electric motor and generate the fluid-flow;
   measuring, for each of the plurality of control values, a fluid-flow value and a first feedback value, the feedback value corresponding to a feedback parameter;
   computing a mathematical relationship between fluid-flow rate and one of the control parameter or the feedback parameter;
   receiving a fluid-flow rate demand value;
   computing an operating setpoint for the control parameter based on the fluid-flow rate demand value and the computed mathematical relationship;
   controlling the drive circuit to operate the electric motor at the operating setpoint;
   determining a difference between a current fluid-flow rate value and the fluid-flow rate demand value is greater than a threshold difference; and
   recomputing the mathematical relationship in response to a determination the difference is greater than the threshold difference.

5. The method of Claim 4, wherein computing the mathematical relationship comprises computing the mathematical relationship based on the plurality of control values, the fluid flow values, and the feedback values.

6. The method of Claim 4, or the control system of claim 1, wherein the mathematical relationship is defined by one of a linear equation, a polynomial equation, an exponential equation, or a power equation.

7. The method of Claim 4, wherein controlling a drive circuit to operate the electric motor at the plurality of control values comprises:

controlling the drive circuit to operate the electric motor at a first control value of the control parameter; and controlling the drive circuit to operate the electric motor at a second control value of the control parameter.

8. The method of Claim 4, or the control system of claim 1, wherein the control parameter is torque and the feedback parameter is speed.

9. The method of Claim 4, or the control system of claim 1, wherein the control parameter is speed and the feedback parameter is torque.

10. The method of Claim 4, or the control system of claim 1, wherein the control parameter is one of input power, shaft power, or current.

11. A fluid moving system comprising:

a fluid-moving apparatus;
an electric motor coupled to said fluid moving apparatus, said electric motor configured to drive said fluid-moving apparatus to generate a fluid-flow; and
the control system of Claim 1.

12. The fluid moving system of Claim 11, or the control system of claim 1, wherein to compute the mathematical relationship, said processor is configured to compute the mathematical relationship based on the plurality of control values, the fluid flow values, and the feedback values.

13. The fluid moving system of Claim 11, wherein said fluid-moving apparatus comprises one of a backward-curved blower, a forward-curved blower, or a vane-axial fan, and wherein said fluid-flow is an airflow.

**Patentansprüche**

1. Steuersystem für einen Elektromotor, der ausgelegt ist, eine Fluidbewegungsvorrichtung anzutreiben, um einen Fluidstrom zu erzeugen, das Steuersystem umfassend:

eine Ansteuerungsschaltung, die ausgelegt ist, einem Stator des Elektromotors zugeführte elektrische Leistung zu regulieren, um einen Rotor des Elektromotors zu drehen und den Fluidstrom zu erzeugen; und
einen Prozessor, der mit der Ansteuerungsschaltung in Verbindung gekoppelt und ausgelegt ist für ein:

Steuern der Ansteuerungsschaltung für ein Betreiben des Elektromotors bei einer Mehrzahl von Steuerwerten eines Steuerparameters;
Bestimmen, für jeden der Mehrzahl von Steuerwerten, eines Wertes für den Fluidstrom und eines Rückkopplungswertes, der Rückkopplungswert entspricht einem Rückkopplungsparameter;
Berechnen einer mathematischen Beziehung zwischen der Fluiddurchflussmenge und einem des Steuerparameters oder des Rückkopplungsparameters;
Empfangen eines Fluiddurchflussmengen-Bedarfswertes;
Berechnen eines Betriebssollwertes für den Steuerparameter basierend auf dem Fluiddurchflussmengen-Bedarfswert und der berechneten mathematischen Beziehung;
Steuern der Ansteuerungsschaltung für ein Betreiben des Elektromotors bei dem Betriebssollwert;
Bestimmen, dass eine Differenz zwischen einem aktuellen Fluiddurchflussmengenwert und dem Fluiddurchflussmengen-Bedarfswert größer ist als eine Schwellendifferenz; und
Neuberechnen der mathematischen Beziehung in Reaktion auf ein Bestimmen, dass die Differenz größer ist als die Schwellendifferenz ist.

2. Steuersystem nach Anspruch 1, wobei für ein Betreiben des Elektromotors bei einer Mehrzahl von Steuerwerten eines Steuerparameters der Prozessor ferner ausgelegt ist für ein:

Steuern der Ansteuerungsschaltung für ein Betreiben des Elektromotors bei einem ersten Steuerwert des Steuerparameters; und

Steuern der Ansteuerungsschaltung für ein Betreiben des Elektromotors bei einem zweiten Steuerwert des Steuerparameters.

3. Steuersystem nach Anspruch 1, wobei die Fluidbewegungsvorrichtung ein rückwärts gekrümmtes Gebläse, ein vorwärts gekrümmtes Gebläse oder ein Flügelrad-Axialgebläse beinhaltet und wobei der Fluidstrom ein Luftstrom ist.

4. Verfahren für ein Steuern eines Elektromotors, der ausgelegt ist, eine Fluidbewegungsvorrichtung anzutreiben, um einen Fluidstrom zu erzeugen, das Verfahren umfassend:

Steuern einer Ansteuerungsschaltung für ein Betreiben des Elektromotor bei einer Mehrzahl von Steuerwerten eines Steuerparameters, die Ansteuerungsschaltung ist ausgelegt für ein Regulieren der einem Stator des Elektromotors zugeführten elektrischen Leistung, um einen Rotor des Elektromotors zu drehen und den Fluidstrom zu erzeugen;

Messen, für jeden der Mehrzahl von Steuerwerten, eines Fluidstromwertes und eines ersten Rückkopplungswertes, der Rückkopplungswert entspricht einem Rückkopplungsparameter;

Berechnen einer mathematischen Beziehung zwischen der Fluiddurchflussmenge und einem des Steuerparameters oder des Rückkopplungsparameters;

Empfangen eines Fluiddurchflussmengen-Bedarfswertes;

Berechnen eines Betriebssollwertes für den Steuerparameter basierend auf dem Fluiddurchflussmengen-Bedarfswert und der berechneten mathematischen Beziehung;

Steuern der Ansteuerungsschaltung für ein Betreiben des Elektromotors bei dem Betriebssollwert;

Bestimmen, dass eine Differenz zwischen einem aktuellen Fluiddurchflussmengenwert und dem Fluiddurchflussmengen-Bedarfswert größer ist als eine Schwellendifferenz; und

Neuberechnen der mathematischen Beziehung in Reaktion auf ein Bestimmen, dass die Differenz größer ist als die Schwellendifferenz ist.

5. Verfahren nach Anspruch 4, wobei das Berechnen der mathematischen Beziehung ein Berechnen der mathematischen Beziehung basierend auf der Mehrzahl von Steuerwerten, den Fluidstromwerten und den Rückkopplungswerten umfasst.

6. Verfahren nach Anspruch 4 oder das Steuersystem nach Anspruch 1, wobei die mathematische Beziehung durch eine lineare Gleichung, eine Polynomgleichung, eine Exponentialgleichung oder eine Potenzgleichung definiert ist.

7. Verfahren nach Anspruch 4, wobei das Steuern einer Ansteuerungsschaltung für ein Betreiben des Elektromotors bei der Mehrzahl von Steuerwerten umfasst:

Steuern der Ansteuerungsschaltung für ein Betreiben des Elektromotors bei einem ersten Steuerwert des Steuerparameters; und

Steuern der Ansteuerungsschaltung für ein Betreiben des Elektromotors bei einem zweiten Steuerwert des Steuerparameters.

8. Verfahren nach Anspruch 4 oder Steuersystem nach Anspruch 1, wobei der Steuerparameter das Drehmoment und der Rückkopplungsparameter die Drehzahl ist.

9. Verfahren nach Anspruch 4 oder Steuersystem nach Anspruch 1, wobei der Steuerparameter die Drehzahl und der Rückkopplungsparameter das Drehmoment ist.

10. Verfahren nach Anspruch 4 oder Steuersystem nach Anspruch 1, wobei der Steuerparameter eines ist von Eingangsleistung, Wellenleistung oder Strom.

11. Fluidbewegungssystem, umfassend:

eine Fluidbewegungsvorrichtung;

einen Elektromotor, der mit der Fluidbewegungsvorrichtung gekoppelt ist, wobei der Elektromotor ausgelegt ist, die Fluidbewegungsvorrichtung anzutreiben, um einen Fluidstrom zu erzeugen; und

das Steuersystem nach Anspruch 1.

**12.** Fluidbewegungssystem nach Anspruch 11 oder das Steuersystem nach Anspruch 1, wobei für ein Berechnen der mathematischen Beziehung der Prozessor ausgelegt ist, die mathematische Beziehung basierend auf der Mehrzahl von Steuerwerten, der Fluidstromwerte und der Rückkopplungswerte zu berechnen.

**13.** Fluidbewegungssystem nach Anspruch 11, wobei die Fluidbewegungsvorrichtung ein rückwärts gekrümmtes Gebläse, ein vorwärts gekrümmtes Gebläse oder ein Flügelrad-Axialgebläse umfasst, und wobei der Fluidstrom ein Luftstrom ist.

**Revendications**

**1.** Système de commande pour un moteur électrique configuré pour entraîner un appareil de déplacement de fluide pour générer un écoulement de fluide, ledit système de commande comprenant :

un circuit de commande configuré pour réguler la puissance électrique alimentée vers un stator du moteur électrique pour faire tourner un rotor du moteur électrique et générer l'écoulement de fluide ; et
un processeur couplé en communication avec ledit circuit de commande et configuré pour :

commander ledit circuit d'entraînement pour faire fonctionner le moteur électrique à une pluralité de valeurs de commande d'un paramètre de commande ;
déterminer, pour chacune de la pluralité de valeurs de commande, une valeur d'écoulement de fluide et une valeur de rétroaction, la valeur de rétroaction correspondant à un paramètre de rétroaction ;
calculer une relation mathématique entre le débit de fluide et l'un parmi le paramètre de commande ou le paramètre de rétroaction ;
recevoir une valeur de demande de débit de fluide ;
calculer un point de consigne de fonctionnement pour le paramètre de commande sur la base de la valeur de demande de débit de fluide et de la relation mathématique calculée ;
commander ledit circuit d'entraînement pour faire fonctionner le moteur électrique au point de consigne de fonctionnement ;
déterminer une différence entre une valeur de débit de fluide actuelle et la valeur de demande de débit de fluide est supérieure à une différence seuil ; et
recalculer la relation mathématique en réponse à une détermination que la différence est supérieure à la différence seuil.

**2.** Système de commande selon la revendication 1, dans lequel, pour faire fonctionner le moteur électrique à une pluralité de valeurs de commande d'un paramètre de commande, ledit processeur est en outre configuré pour :

commander ledit circuit d'entraînement pour faire fonctionner le moteur électrique à une première valeur de commande du paramètre de commande ; et
commander ledit circuit d'entraînement pour faire fonctionner le moteur électrique à une deuxième valeur de commande du paramètre de commande.

**3.** Système de commande selon la revendication 1, dans lequel l'appareil de déplacement de fluide comporte l'un parmi une soufflante incurvée vers l'arrière, une soufflante incurvée vers l'avant, ou un ventilateur hélicoïdal, et dans lequel ledit écoulement de fluide est un écoulement d'air.

**4.** Procédé pour commander un moteur électrique configuré pour entraîner un appareil de déplacement de fluide afin de générer un écoulement de fluide, ledit procédé comprenant :

la commande d'un circuit d'entraînement pour faire fonctionner le moteur électrique à une pluralité de valeurs de commande d'un paramètre de commande, le circuit d'entraînement étant configuré pour réguler la puissance électrique alimentée vers un stator du moteur électrique pour faire tourner un rotor du moteur électrique et générer l'écoulement de fluide ;
la mesure, pour chacune de la pluralité de valeurs de commande, d'une valeur d'écoulement de fluide et d'une première valeur de rétroaction, la valeur de rétroaction correspondant à un paramètre de rétroaction ;
le calcul d'une relation mathématique entre le débit de fluide et l'un parmi le paramètre de commande ou le paramètre de rétroaction ;
la réception d'une valeur de demande de débit de fluide ;

le calcul d'un point de consigne de fonctionnement pour le paramètre de commande sur la base de la valeur de demande de débit de fluide et de la relation mathématique calculée ;

la commande dudit circuit d'entraînement pour faire fonctionner le moteur électrique au point de consigne de fonctionnement ;

la détermination d'une différence entre une valeur de débit de fluide actuelle et la valeur de demande de débit de fluide est supérieure à une différence seuil ; et

le recalcul de la relation mathématique en réponse à une détermination que la différence est supérieure à la différence seuil.

5. Procédé selon la revendication 4, dans lequel le calcul de la relation mathématique comprend le calcul de la relation mathématique sur la base de la pluralité de valeurs de commande, des valeurs d'écoulement de fluide et des valeurs de rétroaction.

6. Procédé selon la revendication 4, ou système de commande selon la revendication 1, dans lequel la relation mathématique est définie par l'une parmi une équation linéaire, une équation polynomiale, une équation exponentielle ou une équation de puissance.

7. Procédé selon la revendication 4, dans lequel la commande d'un circuit d'entraînement pour faire fonctionner le moteur électrique à la pluralité de valeurs de commande comprend :

la commande dudit circuit d'entraînement pour faire fonctionner le moteur électrique à une première valeur de commande du paramètre de commande ; et

la commande dudit circuit d'entraînement pour faire fonctionner le moteur électrique à une deuxième valeur de commande du paramètre de commande.

8. Procédé selon la revendication 4, ou système de commande selon la revendication 1, dans lequel le paramètre de commande est le couple et le paramètre de rétroaction est la vitesse.

9. Procédé selon la revendication 4, ou système de commande selon la revendication 1, dans lequel le paramètre de commande est la vitesse et le paramètre de rétroaction est le couple.

10. Procédé selon la revendication 4, ou système de commande selon la revendication 1, dans lequel le paramètre de commande est l'une parmi une puissance d'entrée, une puissance d'arbre ou un courant.

11. Système de déplacement de fluide comprenant :

un appareil de déplacement de fluide ;

un moteur électrique couplé audit appareil de déplacement de fluide, ledit moteur électrique étant configuré pour entraîner ledit appareil de déplacement de fluide pour générer un écoulement de fluide ; et

le système selon la revendication 1.

12. Système de déplacement de fluide selon la revendication 11, ou système de commande selon la revendication 1, dans lequel, pour calculer la relation mathématique, ledit processeur est configuré pour calculer la relation mathématique sur la base de la pluralité de valeurs de commande, des valeurs d'écoulement de fluide et des valeurs de rétroaction.

13. Système de déplacement de fluide selon la revendication 11, dans lequel ledit appareil de déplacement de fluide comprend l'un parmi une soufflante incurvée vers l'arrière, une soufflante incurvée vers l'avant, ou un ventilateur hélicoïdal, et dans lequel ledit écoulement de fluide est un écoulement d'air.

FIG. 1

FIG. 2

FIG. 3

FIG. 4

/— 500

/— 502

CONTROL A DRIVE CIRCUIT TO OPERATE AN ELECTRIC MOTOR AT A PLURALITY OF CONTROL VALUES OF A CONTROL PARAMETER

/— 504

DETERMINE, FOR EACH OF THE PLURALITY OF CONTROL VALUES, A FLUID-FLOW VALUE AND A FEEDBACK VALUE

/— 506

COMPUTE A MATHEMATICAL RELATIONSHIP BETWEEN FLUID-FLOW RATE AND ON OF THE CONTROL PARAMETER OR THE FEEDBACK PARAMETER

/— 508

RECEIVE A FLUID-FLOW RATE DEMAND VALUE

/— 510

COMPUTE AN OPERATING SETPOINT FOR THE CONTROL PARAMETER BASED ON THE FLUID-FLOW RATE DEMAND VALUE AND THE COMPUTED MATHEMATICAL RELATIONSHIP

/— 512

CONTROL THE DRIVE CIRCUIT TO OPERATE THE ELECTRIC MOTOR AT THE OPERATING SETPOINT

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 22341721

- WO 2020146387 A1